**Europäisches Patentamt**

**European Patent Office**

**Office européen des brevets**

(19)

(11) Veröffentlichungsnummer: **0 219 681**
**B1**

(12)

# EUROPÄISCHE PATENTSCHRIFT

(45) Veröffentlichungstag der Patentschrift:
**30.08.89**

(21) Anmeldenummer: **86112716.5**

(22) Anmeldetag: **15.09.86**

(51) Int. Cl.⁴: **H02K 5/22**, H02K 7/116,
H02K 5/14

(54) Geschlossene Motor-Getriebe-Einheit.

(30) Priorität: **26.09.85 DE 3534339**

(43) Veröffentlichungstag der Anmeldung·
**29.04.87 Patentblatt 87/18**

(45) Bekanntmachung des Hinweises auf die Patenterteilung:
**30.08.89 Patentblatt 89/35**

(84) Benannte Vertragsstaaten:
**DE FR GB IT**

(56) Entgegenhaltungen:
**FR-A- 2 271 693**
**FR-A- 2 530 885**
**US-A- 3 455 174**

(73) Patentinhaber: **Siemens Aktiengesellschaft,
Wittelsbacherplatz 2, D-8000 München 2(DE)**

(72) Erfinder: **Adam, Peter, Allerseeweg 25,
D-8706 Höchberg(DE)**
Erfinder: **Michel, Peter, Dipl.-Ing., Geroldshäuser
Strasse 15, D-8702 Kleinrinderfeld(DE)**

## Beschreibung

Die Erfindung bezieht sich auf eine geschlossene Motor-Getriebe-Einheit, insbesondere einen elektromotorisch angetriebenen Kraftfahrzeug-Fensterheber, mit axial unter Zwischenlage einer Dichtung gegeneinander verspanntem Motorgehäuse einerseits und Getriebegehäuse andererseits und mit abgedichtet durch eine stirnseitig offene Motorgehäuseöffnung zugeführten elektrischen Speiseleitungen; eine derartige Anordnung ist durch eine offenkundige Vorbenutzung bekannt (siehe auch FR-A 2 271 693).

Bei der bekannten Motor-Getriebe-Einheit ist eine Kunststoff-Bürstentragplatte mit einer angeformten radialen, aus der Motorgehäuseöffnung ragenden Durchführung vorgesehen, wobei in die Durchführung Flachkontakte eingespritzt sind, an deren innere Enden die zu den Kohlebürsten führenden Leitungsenden und auf deren äußere Enden die äußeren Speiseleitungen angelötet sind. Zur Isolierung der äußeren Stecker dienen gesonderte Abdeckkappen. Als Dichtung zwischen den beiden Gehäusen von Motor und Getriebe wird vor deren gegenseitiger Verspannung eine aus einem Hartmaterial formgestanzte Dichtung zwischengelegt; die Durchführung schließlich wird durch ein kriechfähiges Dichtmittel, insbesondere mittels Silikon; gegenüber dem Motorgehäuse abgedichtet.

Gemäß Aufgabe vorliegender Erfindung soll die feuchtigkeitsdichte gegenseitige Verspannung von Motogehäuse und Getriebegehäuse und Zuführung der äußeren Motoranschlußleitungen zu einer Bürstentragplatte des Motors ferti gungstechnisch, insbesondere im Hinblick auf eine vorteilhafte Automatenfertigung, bei gewährleisteter Betriebssicherheit vereinfacht werden.

Die Lösung der gestellten Aufgabe gelingt bei einer Anordnung der eingangs genannten Art erfindungsgemäß durch die Lehre des Anspruchs 1; vorteilhafte Ausgestaltungen der Erfindung sind jeweils Gegenstand der Unteransprüche.

Die erfindungsgemäß aufgebaute Motor-Getriebe-Einheit erlaubt in einem einzigen Fertigungs-Handhabungsvorgang sowohl die Abdichtung der beiden gegeneinander verspannten Gehäusehälften von Motor und Getriebe als auch die feuchtigkeitsdichte Einführung der äußeren Speiseleitungen in das Motorgehäuse und erübrigt darüberhinaus eine gesonderte feuchtigkeitsisolierende Abdeckung von im bekannten Fall nach außen führenden Anschlußfahnen. Eine besonders hohe Anpassungsflexibilität der Dichtung bei gleichzeitig guter Dichtungslagezentrierung ist dadurch möglich, daß nach einer Ausgestaltung der Erfindung die Dichtung scheibenförmig ausgebildet und radial innerhalb des außen umlaufenden Dichtflächenrandes mit Paßöffnungen für korrespondierende, einsteckbare, an die Gehäusestirnfläche des Getriebegehäuses axial angeformte Führungen versehen bzw. daß die Durchführung beim Verspannen von Motorgehäuse und Getriebegehäuse selbstzentrierend gegen die Wandung der Gehäuseöffnung dichtend angedrückt ist.

Ein unkontrolliertes radiales Wegdrücken des Dichtungsmaterials kann ggf. auf einfache Weise dadurch verhindert werden, daß die Paßöffnungen in Umfangsrichtung schlitzförmig parallel zur Gehäusekontur verlaufen; die korrespondierenden Führungsnasen haben somit die Form von in Umfangsrichtung verlaufenden Wandteilen, gegen die sich die Dichtung bei zu großem radialen Druck abstützen kann. In vorteilhafter Weise werden diese Führungsnuten durch Anlage an der Innenwandung des Motorgehäuses zur gegenseitigen axialen Ausrichtung von Motor- und Getriebegehäuse bei deren gegenseitiger Verspannung mitbenutzt.

Die Fertigung der geschlossenen Motor-Getriebe-Einheit mittels der erfindungsgemäßen einzigen Abdichtungsmaßnahme für die Stirnseiten der beiden zu verspannenden Gehäusehälften, der in die Motorgehäuseöffnung einzuführenden Speiseleitungen und deren Kontaktierung kann dadurch noch weiter vereinfacht werden, daß die Dichtung mit einer betriebsmäßig im Motorgehäuse axial hinter der Dichtung angeordneten Bürstenhalterung durch Verrasten bzw. Verklemmen oder Verkleben bzw. Verschweißen verbunden ist und daß die fertigbestückte Bürstenhalterung mit den bereits an den Bürsten kontaktierten Speiseleitungen und die Dichtung mit den darin gehaltenen und in der angeformten Durchführung einvulkanisierten bzw. eingespritzten Speiseleitungen Teile einer vorgefertigten Montageeinheit sind.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

Fig. 1 einen axialen Längsschnitt durch eine Motor-Getriebe-Einheit eines Kfz-Fensterheberantriebes;

Fig. 2 eine Ansicht der Anordnung gemäß Fig.1 in Richtung II;

Fig. 3 eine Draufsicht auf die zu verspannende Gehäusestirnseite des Getriebegehäuses;

Fig. 4 die Seitenansicht der Anordnung gemäß Fig.3;

Fig. 5 eine Draufsicht auf die zu verspannende Gehäusestirnseite des Motorgehäuses;

Fig. 6 eine axiale Draufsicht auf das Motorgehäuse;

Fig. 7 die längsseitige Draufsicht auf die lediglich lose unter Zwischenlage einer Dichtung zusammengeführten Motorgehäuse und Getriebegehäuse;

Fig. 8 die längsseitige Draufsicht auf die nunmehr fest axial gegeneinander verspannten Motorgehäuse und Getriebegehäuse.

Fig. 9 eine motorgehäuseseitige Draufsicht auf die zwischen Getriebegehäuse und Motorgehäuse zwischengelegte Dichtung;

Fig. 10 eine getriebegehäuseseitige Draufsicht auf die zwischen Getriebegehäuse und Motorgehäuse zwischengelegte Dichtung;

Fig. 11 die Dichtung gemäß Fig.10 im Schnittverlauf XI-XI;

Fig. 12 die Dichtung gemäß Fig.10 im Schnittverlauf XII-XII.

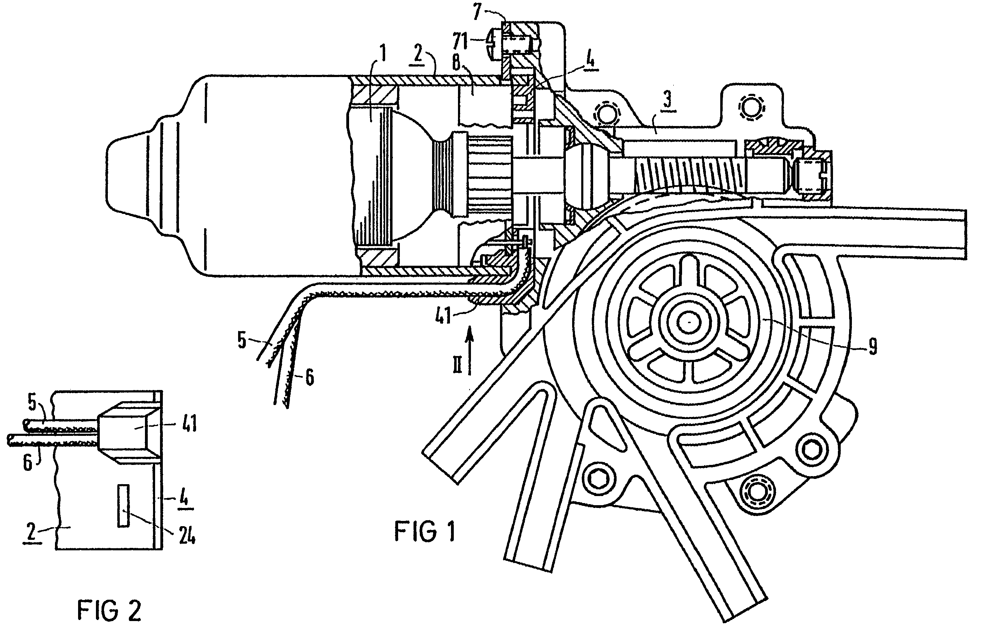

Fig. 1 zeigt einen axialen Längsteilschnitt durch eine Motor-Getriebe-Einheit eines Kraftfahrzeug-Fensterhebers. Die Motor-Getriebe-Einheit besteht aus einem in einem Motorgehäuse 2 angeordneten dauermagneterregten Kommutatormotor und in einem Getriebegehäuse 3 angeordneten Getriebe mit einer Seilscheibe, von der in hier nicht näher dargestellter Weise eine Seilschleife zu einem das Kraftfahrzeug-Fenster hebenden bzw. senkenden Schlitten führt. Die Rotorwelle 1 des dauermagneterregten Kommutatormotors ist an ihrem rechten, in das Getriebegehäuse 3 ragenden Ende mit einer Schneckenwelle versehen, die ein Schneckenrad des in dem Getriebegehäuse 3 angeordneten Getriebes antreibt. Das Motorgehäuse 2 ist gegen flanschartige Ansätze des Getriebegehäuses 3 über in Befestigungsöffnungen 24 eingreifende Befestigungslappen 7 durch Anziehen von durch die freien Enden der Befestigungslappen 7 durchgesteckte Schrauben festspannbar.

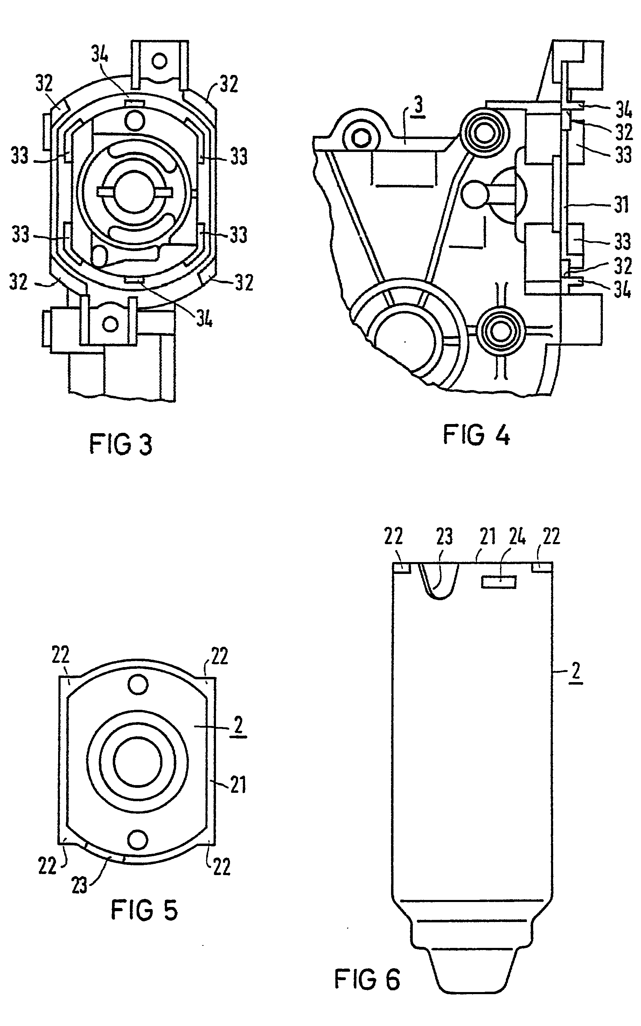

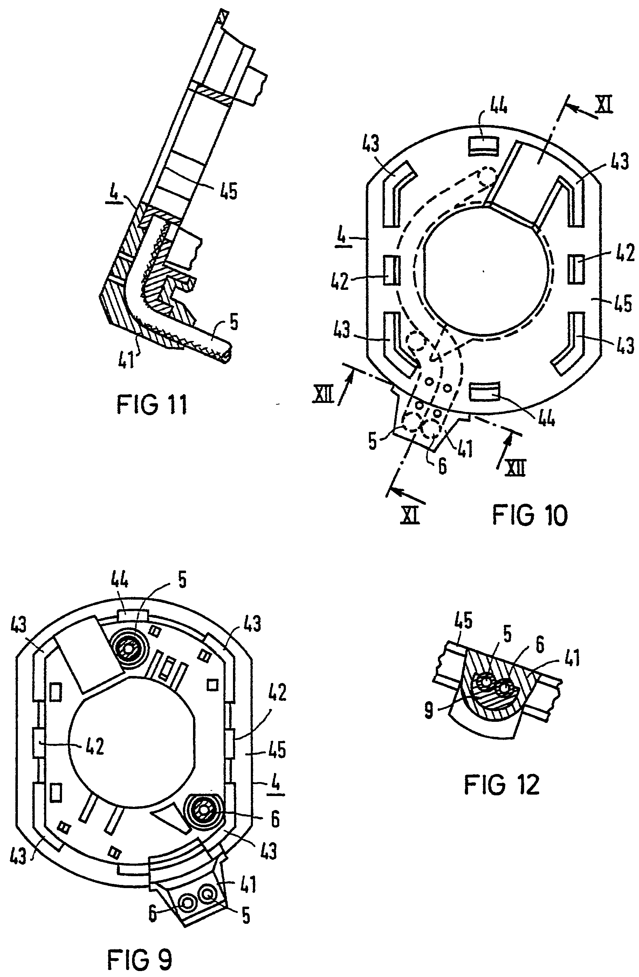

Zum dichtenden Abschluß der in Fig.3 bzw. Fig.5 dargestellten, gegenseitig zu verspannenden, voreinanderstoßenden Gehäusestirnflächen 21 bzw.31 von Motorgehäuse 2 einerseits bzw. Getriebegehäuse 3 andererseits ist eine Dichtung 4 zwischengelegt, deren nähere konstruktive Gestaltung in einem bevorzugten Ausführungsbeispiel anhand der Figuren 9 bis 12 später beschrieben wird.

Wie aus Fig.1 ersichtlich, ist unmittelbar axial vor der Dichtung 4 eine den Kommutator des dauermagneterregten Kommutatormotors umschließende Bürstenhalterung 8 vorgesehen, in der u.a. Kohlebürsten zur Bestromung des Kommutators und Entstörmittel zur Funkentstörung gehaltert sein können. Die in der Bürstenhalterung 8 angeordneten, hier nicht näher dargestellte Kohlebürsten, sind an äußere Speiseleitungen 5,6 angeschlossen, die durch eine insbesondere aus Fig.4 ersichtliche, konusförmige stirnseitig offene Gehäuseöffnung 23 der Motorgehäuses 2 nach außen herausgeführt sind. Zur feuchtigkeitsdichtenden Herausführung der äußeren Speiseleitungen 5,6 aus dem Motorgehäuse 2 durch die konusförmige Gehäuseöffnung 23 ist an die Dichtung 4 einstückig eine Durchführung 41 angeformt, in die die äußeren Speiseleitungen 5,6 eingespritzt bzw. einvulkanisiert sind.

Erfindungsgemäß besteht die Dichtung 4 mit der einstückig angeformten Durchführung 41 aus einem unter dem Druck der gegeneinander verspannten Stirnflächen 21,31 von Motorgehäuse 2 und Getriebegehäuse 3 zusammendrückbaren elastischem Material, insbesondere einem Elastomer, daß sich unter dem Verspanndruck der Gehäusestirnflächen selbstdichtend den Gehäusekonturen anlegt. Aufgrund der konusförmigen Ausbildung der Gehäuseöffnung 23 wird beim gegenseitigen Verspannen von Motorgehäuse 2 und Getriebegehäuse 3 auch die Durchführung 41 selbstdichtend und selbstzentrierend formschlüssig an die Gehäusewandungen der Gehäuseöffnung 23 angedrückt.

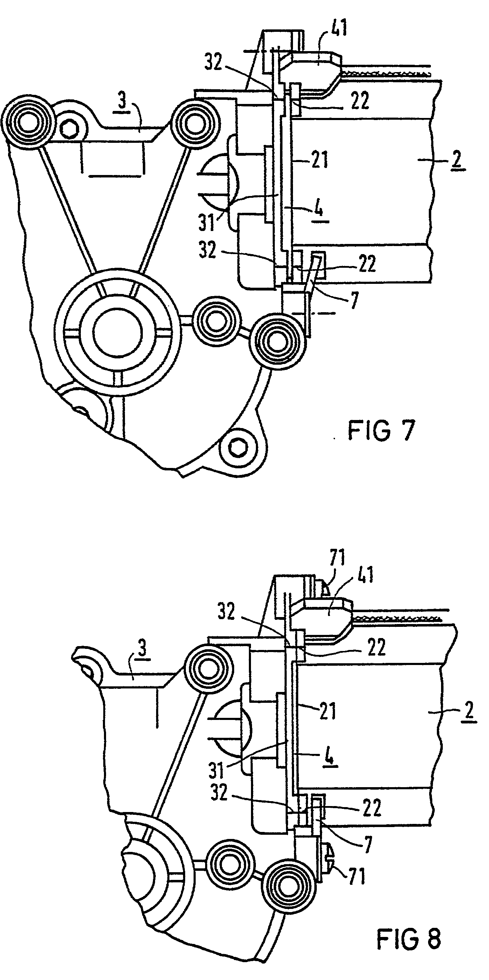

An die Gehäusestirnflächen 21 bzw.31 sind beim Verspannen axial voreinander zur Anlage kommende Puffer 22 bzw. 32 radial außerhalb der Dichtung 4 angeformt, die ein zu starkes undefiniertes Zusammenquetschen der Dichtung 4 verhindern bzw. gewährleisten, daß bei der erfindungsgemäß ausgebildeten Dichtung 4 eine genaue Fluchtung von Motorgehäuse 2 zum Getriebegehäuse 3 beim gegenseitigen Verspannen möglich ist. Zur näheren Erläuterung dieses Vorgangs wird auf die Figuren 7,8 verwiesen. Fig.7 zeigt die zunächst lose gefügte Motor-Getriebe Einheit, bei der die Befestigungslappen 7 bereits in die Befestigungsöffnung 24 des Motorgehäuses 2 eingesteckt, jedoch noch nicht gegenüber der Stirnfläche 31 des Getriebsgehäuses 3 festgeschraubt sind. Die Puffer 22 bzw.32 des Motorgehäuses 2 bzw. des Getriebegehäuses 3 liegen noch in axialem Abstand bei noch nicht axial verquetschter Dichtung 4 zwischen den Gehäusestirnflächen 21 bzw.31 gegenüber

Fig.8 zeigt die nunmehr durch Einschrauben der Schraube 71 und Anziehen des Befestigungslappens 7 gegeneinander verspannten Teile des Motorgehäuses 2 einerseits und des Getriebegehäuses 3 andererseits, wobei die Puffer 22 bzw.32 axial gegeneinanderliegen und somit gewährleisten, daß einerseits die aus einem weichen Material bestehende Dichtung 4 bzw. die daran einstückig angeformte Durchführung 41 dichtend an ihre andrückenden Flächen anliegen, jedoch andererseits die in Fig.8 zwischen den Gehäusestirnflächen 21 einerseits und 31 andererseits bestehende definierte Mindestdicke mit dabei gewährleisteter Kontur einnehmen können.

Als zusätzliche Maßnahme zur Verhinderung eines undefinierten, insbesondere seitlichen Wegdrückens der Dichtung 4 ist diese - wie insbesondere aus den Figuren 9 bis 10 ersichtlich - scheibenförmig ausgebildet und radial innerhalb des außenumlaufenden Dichtflächenrandes 45 mit in Umfangsrichtung schlitzförmigen Paßöffföffnungen 43,44 für korrespondierende, bei an der Gehäusestirnfläche 31 - wie insbesondere aus Fig.4 ersichtlich - des Getriebegehäuse 3 axial angeformten Führungsnasen 33,34 versehen, die in vorteilhafter Weise gleichzeitig durch Anlage an der Innenwandung des Motorgehäuses 2 bei dessen Verspannung gegen das Getriebegehäuse 3 zur axialen gegenseitigen Ausrichtung beider Gehäuse mitbenutzt werden.

Die scheibenförmige Ausbildung der Dichtung 4 kann in vorteilhafter Weise auch dazu benutzt werden, um Führungen z.B. in Form von Führungsnuten bzw. Führungsstege zur gezielten Verlegung der äußeren Anschlußleitungen 5,6 an die Anschlußpunkte für die betriebsmäßig hinter der Dichtung 4 anzuordnende Bürstenhalterung 8 anzuformen. Die Figuren 11,12 zeigen im Detail die Verlegung der äußeren Anschlußleitungen 5,6 innerhalb der Dichtung 4 in den eingezeichneten Schnittverläufen. Wie aus dem Schnittbild gemäß Fig.12 ersichtlich, sind die Anschlußleitungen 5,6 in einem Haltestück 9 in entsprechende Nutvertiefungen vorfixiert gehalten von dem elastischen Material der Durchführung 41 der Dichtung 4 umspritzt.

Nach einer besonderen Ausgestaltung der Erfindung ist zur weiteren Fertigungsvereinfachung vorgesehen, daß die, mit Bürstenhaltern und Entstörmitteln bestückte und mit den Speiseleitungen 5,6 kontaktierte Bürstenhalterung 8 und die Dichtung 4 mit den darin geführten und in der angeformten Durchführung 41 anvulkanisierten bzw. eingespritzten Speiseleitungen Teile einer vorgefertigten Montageeinheit sind, wobei die vormontierte Verbindung zwischen der Dichtung und der betriebsmäßig axial im Motorgehäuse hinter der Dichtung angeordneten Bürstenhalterung 8 z.B. durch gegenseitiges Verrasten und Verklemmen oder Verschweißen bzw. Verkleben erfolgen kann.

## Patentansprüche

1. Geschlossene Motor-Getriebe-Einheit, insbesondere für einen elektromotorisch angetriebenen Kraftfahrzeug-Fensterheber, mit axial unter Zwischenlage einer Dichtung (4) gegeneinander verspanntem Motorgehäuse (2) einerseits und Getriebegehäuse (3) andererseits und mit abgedichtet durch eine stirnseitig offene Motorgehäuseöffnung (23) zugeführten elektrischen Speiseleitungen (5, 6), mit den Merkmalen:

a) Die Dichtung (4) besteht aus einem beim gegenseitigen Verspannen von Motorgehäuse (2) und Getriebegehäuse (3) zwischen deren voreinanderstoßende Gehäusestirnflächen (21 bzw.31) zusammendrückbaren elastischen Material;

b) an die Dichtung (4) ist einstückig eine beim Verspannen von Motorgehäuse (2) und Getriebegehäuse (3) in die Motorgehäuseöffnung (23) eindrückbare Durchführung (41) angeformt, in welche die Speiseleitungen (5,6) eingespritzt bzw. einvulkanisiert sind;

c) an die unter Zwischenlage der Dichtung (4) voreinanderstoßenden Gehäusestirnflächen (21 bzw.31) sind radial außerhalb der Dichtung (4) deren Verformung im Sinne einer definierten Dichtanlage begrenzende, axial voreinander zur Anlage kommende Puffer (22 bzw.32) angeformt.

d) Die Dichtung ist scheibenförmig ausgebildet und radial innerhalb des außen umlaufenden Dichtflächenrandes (45) mit Paßöffnungen (43,44) für korrespondierende, einsteckbare gehäusefeste Führungsnasen (33, 34) versehen.

2. Geschlossene Motor-Getriebe-Einheit nach Anspruch 1 mit dem Merkmal:
e) Die gehäusefesten Führungsnasen (33, 34) sind axial an die Gehäusestirnfläche (31) des Getriebegehäuses (3) angeformt.

3. Geschlossene Motor-Getriebe-Einheit nach Anspruch 1 und/oder 2 mit dem Merkmal:
f) Die Dichtung (4) mit der einstückig angeformten Durchführung (41) besteht aus einem Elastomer-Kunststoff.

4. Geschlossene Motor-Getriebe-Einheit nach zumindest einem der Ansprüche 1 bis 3 mit dem Merkmal:
g) Die Paßöffnungen (43,44) verlaufen in Umfangsrichtung parallel zur Gehäusekontur.

5. Geschlossene Motor-Getriebe-Einheit nach Anspruch 3 und/oder 4 mit dem Merkmal:
h) Die in die Paßöffnungen (43,44) eingesteckten Führungsnasen (33,34) liegen im Sinne einer axialen Ausrichtung von gegeneinander verspanntem Motorgehäuse (2) und Getriebegehäuse (3) an der Innenwandung des Motorgehäuses (2) an.

6. Geschlossene Motor-Getriebe-Einheit nach zumindest einem der Ansprüche 1 bis 5 mit dem Merkmal:
i) Die Gehäuseöffnung (23) ist konusförmig derart ausgebildet, daß die Durchführung (41) beim Verspannen von Motorgehäuse (2) und Getriebegehäuse (3) selbstzentrierend gegen die Wandung der Gehäuseöffnung (23) dichtend angedrückt ist.

7. Geschlossene Motor-Getriebe-Einheit nach zumindest einem der Ansprüche 1 bis 6 mit dem Merkmal:
j) An die Dichtung (4) sind radial innerhalb des außen umlaufenden Dichtflächenrandes (45) Führungen für die zu einer betriebsmäßig hinter der Dichtung (4) angeordnete Bürstenhalterung (8) führenden Speiseleitungen (5,6) angeformt.

8. Geschlossene Motor-Getriebe-Einheit nach Anspruch 7 mit dem Merkmal:
k) Die bestückte Bürstenhalterung (8) mit den kontaktierten Speiseleitungen (5,6) und die Dichtung (4) mit den darin geführten und in der angeformten Durchführung (41) einvulkanisierten bzw. eingespritzten Speiseleitungen (5,6) sind Teile einer vorgefertigten Montageeinheit.

9. Geschlossene Motor-Getriebe-Einheit nach Anspruch 8 mit dem Merkmal:
l) Die Dichtung (4) ist mit der Bürstenhalterung (8) durch Verklemmen und/oder Verrasten vormontiert verbunden.

10. Geschlossene Motor-Getriebe-Einheit nach Anspruch 8 mit dem Merkmal:
m) Die Dichtung (4) ist mit der Bürstenhalterung (8) durch Verkleben bzw. Verschweißen vormontiert verbunden.

## Claims

1. A sealed motor-transmission-unit, more particularly for a vehicle window lifter driven by an electric motor, comprising on the one hand a motor housing (2) and on the other hand a transmission housing (3), which are axially braced against one another with the interposition of a seal (4), and comprising sealed electrical supply leads (5, 6), which are introduced through a motor housing aperture (23) which opens towards the front, having the following features:

a) The seal (4) is made from an elastic material which is compressible upon the reciprocal bracing of motor housing (2) and transmission housing (3) between their abutting housing end faces (21 and 31);

b) a duct (41), which can be pressed into the motor housing aperture (23) during the bracing of the motor housing (2) and the transmission housing (3), is integrally formed onto the seal (4), into which duct the supply leads (5, 6) are injected or vulcanised;

c) buffers (22 and 32) are formed radially beyond the seal (4) onto the housing end faces (21 and 31) abutting against one another with the interposition of the seal (4), which buffers limit the deformation of said seal in the manner of a defined sealing abutment and come to abut against one another axially.

d) The seal disc-shaped and is provided radially within the circumferential sealing area edge (45) with reamed openings (43, 44) for corresponding insertable guide noses (33, 34) which are rigid with the housing.

2. A sealed motor-transmission-unit according to claim 1 with the feature:

e) The guide noses (33, 34), which are rigid with the housing, are formed axially on the housing end face (31) of the transmission housing (3).

3. A sealed motor-transmission-unit according to claim 1 and/or 2 with the feature:

f) The seal (4) with the integrally formed-on duct (41) is made from an elastomer plastics material.

4. A sealed motor-transmission-unit according to at least one of claims 1 to 3 with the feature:

g) The reamed openings (43, 44) extend in the circumferential direction parallel to the contour of the housing.

5. A sealed motor-transmission-unit according to claim 3 and/or 4 with the feature:

h) The guide noses (33, 34) inserted into the reamed openings (43, 44) abut against the inner wall of the motor housing (2) so as to provide an axial alignment of the reciprocally braced motor housing (2) and transmission housing (3).

6. A sealed motor-transmission-unit according to at least one of claims 1 to 5 with the feature:

i) The housing aperture (23) is formed in the shape of a cone, so that the duct (41) is pressed in a sealing-tight and self-centring manner against the wall of the housing aperture (23) when the motor housing (2) and the transmission housing (3) are braced.

7. A sealed motor-transmission-unit according to at least one of claims 1 to 6 with the feature:

j) Radially within the circumferential sealing area edge (45) guides are formed onto the seal (4) for the supply leads (5, 6) leading to a brush holder (8) which is operationally arranged behind the seal (4).

8. A sealed motor-transmission-unit according to claim 7 with the feature:

k) The fitted brush holder (8) with the connected supply leads (5, 6) and the seal (4) with the supply leads (5, 6) guided therein and vulcanized or injected into the formed-on duct (41) are parts of a pre-fabricated assembly unit.

9. A sealed motor-transmission-unit according to claim 8 with the feature:

l) The seal (4) is pre-assembled with the brush holder (8) by clamping and/or locking.

10. A sealed motor-transmission-unit according to claim 8 with the feature:

m) The seal (4) is pre-assembled with the brush holder (8) by bonding or welding.

## Revendications

1. Unité fermée moteur-transmission, notamment pour un lève-glace de véhicule automobile, entraîné par un moteur électrique, et comportant un carter (2) du moteur d'une part et un carter (3) de la transmission d'autre part, qui sont serrés l'un contre l'autre moyennant l'interposition d'une garniture d'étanchéité (4), et des conducteurs d'alimentation électrique (5, 6) insérés de façon étanche dans une ouverture frontale (23) du carter du moteur, présentant les caractéristiques suivantes:

a) la garniture d'étanchéité (4) est réalisée en un matériau élastique, pouvant être comprimé, lors du serrage du carter (2) du moteur et du carter (3) de la transmission l'un contre l'autre, entre les faces frontales (21 et 31), appliquées l'une contre l'autre, des carters;

b) sur la garniture d'étanchéité (4) se trouve formé par façonnage, et d'un seul tenant, un élément de traversée (41), qui peut être enfoncé dans l'ouverture (23) du carter du moteur lors du serrage du carter (2) moteur et du carter (3) de la transmission, l'un contre l'autre, et dans lequel les conducteurs d'alimentation (5, 6) sont fixés par enrobage par injection ou par vulcanisation;

c) des tampons (22 et 32), qui limitent la déformation de la garniture d'étanchéité (4) dans le sens d'une application étanche définie et qui s'appliquent axialement l'un contre l'autre, sont formés par façonnage extérieurement du point de vue radial, par rapport à la garniture d'étanchéité (4), sur les surfaces frontales (21 et 31) des carters, qui sont appliquées l'une contre l'autre moyennant l'interposition de la garniture d'étanchéité (4);

d) la garniture d'étanchéité est réalisée sous la forme d'un disque et comporte, intérieurement, du point de vue radial, par rapport au bord circonférentiel extérieur (45) de la surface d'étanchéité, des ouvertures de montage (43, 44) pour des becs de guidage enfichables correspondants (33, 34), qui sont solidaires des carters.

2. Unité fermée moteur-transmission suivant la revendication 1, présentant la caractéristique suivante:

e) les becs de guidage (33, 34), solidaires du carter sont formés par façonnage sur la surface frontale (31) du carter (3) de la transmission.

3. Unité fermée moteur-transmission suivant la revendication 1 et/ou 2, présentant la caractéristique suivante:

f) la garniture d'étanchéité (4), munie de l'élément de traversée (41) formé par façonnage et d'un seul tenant, est réalisée en une matière plastique élastomère.

4. Unité fermée moteur-transmission suivant au moins l'une des revendications 1 à 3, présentant la caractéristique suivante:

g) les ouvertures de montage (43, 44) s'étendent, dans la direction circonférentielle, parallèlement au contour du carter.

5. Unité fermée moteur-transmission suivant la revendication 3 et/ou 4, présentant la caractéristique suivante:

h) les becs de guidage (33, 34), enfichés dans les ouvertures de montage (43, 44), s'appliquent contre la paroi intérieure du carter (2) du moteur, dans le sens d'un alignement axial du carter (2) du moteur et du carter (3) de la transmission, qui sont serrés l'un contre l'autre.

6. Unité fermée moteur-transmission suivant au moins l'une des revendications 1 à 5, présentant la caractéristique suivante:

i) l'ouverture (23) du carter possède une forme conique telle que l'élément de traversée (41) est repoussé d'une manière étanche et centrée automatiquement contre la paroi de l'ouverture (23) du carter (2) du moteur, lors du serrage de ce dernier et du carter (3) de la transmission, l'un contre l'autre.

7. Unité fermée moteur-transmission suivant au moins l'une des revendications 1 à 6, présentant la caractéristique suivante:

j) des guides pour les conducteurs d'alimentation (5, 6) aboutissant à un dispositif (8) de support des balais disposé, en fonctionnement, en arrière de la garniture d'étanchéité (4), sont formés sur cette dernière, intérieurement, du point de vue radial, par rapport au bord circonférentiel extérieur (45) de la surface d'étanchéité.

8. Unité fermée moteur-transmission suivant la revendication 7, présentant la caractéristique suivante:

k) le dispositif (8) de support des balais, équipé, et muni des conducteurs d'alimentation raccordés (5, 6), et la garniture d'étanchéité (4) munie des conducteurs d'alimentation (5, 6), qui la traversent et qui sont fixés par vulcanisation ou moulage par injection dans l'élément de traversée (41) formé par façonnage, font partie d'une unité de montage préfabriquée.

9. Unité fermée moteur-transmission suivant la revendication 8, présentant la caractéristique suivante:

l) la garniture d'étanchéité (4) est reliée, lors d'un montage préliminaire, au dispositif (8) de support des balais par blocage par serrage et/ou par encliquetage.

10. Unité fermée moteur-transmission suivant la revendication 8, présentant la caractéristique suivante:

m) la garniture d'étanchéité (4) est reliée, lors d'un montage préliminaire, au dispositif (8) de support des balais par collage ou soudage.

FIG 1

FIG 2

FIG 3

FIG 4

FIG 5

FIG 6

FIG 7

FIG 8

FIG 11

FIG 10

FIG 9

FIG 12